# EUROPÄISCHE PATENTSCHRIFT

(11) **EP 4 165 705 B1**
(45) Veröffentlichungstag und Bekanntmachung des Hinweises auf die Patenterteilung: **13.03.2024**
(21) Anmeldenummer: 21801452.0
(22) Anmeldetag: 25.10.2021
(51) Int. Cl.: H01M 8/0265, H01M 8/241, H01M 8/2483, H01M 8/10

(54) **BIPOLARPLATTE UND BRENNSTOFFZELLENSTAPEL**
FLOW FIELD PLATE AND FUEL CELL STACK
PLAQUE BIPOLAIRE ET EMPILEMENT DE PILES À COMBUSTIBLE

(30) Priorität: 28.10.2020 DE 102020128279
(43) Veröffentlichungstag der Anmeldung: 19.04.2023
(73) Patentinhaber: AUDI AG, 85057 Ingolstadt (DE)
(72) Erfinder: KEITSCH, Oliver, 74076 Heilbronn (DE); SIEBEL, Armin, 74172 Neckarsulm (DE); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2021/079471
(87) Internationale Veröffentlichungsnummer: WO 2022/090125

(56) Entgegenhaltungen:
- WO-A1-2013/105956
- CN-A- 108 736 037
- CN-A- 111 029 611
- CN-A- 111 211 336
- US-A1- 2012 321 987

## Beschreibung

### BESCHREIBUNG:

Die Erfindung betrifft eine Bipolarplatte, die an ihren voneinander wegweisenden Plattenoberflächen jeweils mit einem Reaktantenflussfeld gebildet ist. Jedes der Reaktantenflussfelder umfasst mehrere durch Wandungen von Stegen begrenzte Strömungskanäle für ein Reaktionsmedium. Jedes der Reaktantenflussfelder ist strömungsmechanisch mit dem ihm zugehörigen Medienport verbunden. Diese Verbindung erfolgt über ein Verteilerfeld in einem außerhalb eines aktiven Bereichs befindlichen Verteilbereich. Das Verteilerfeld weist wenigstens einen Kanal auf, der mit einem Strömungsteiler zur Aufteilung eines strömenden Reaktionsmediums vor dessen Einleitung in den aktiven Bereich versehen ist. Eine Mehrzahl an solchen Kanälen des Verteilerfelds mit Strömungsteiler ist ebenfalls möglich. Die Erfindung betrifft außerdem einen Brennstoffzellenstapel mit einer Mehrzahl an Brennstoffzellen, denen derartige Bipolarplatten zugeordnet sind.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff H₂ oder ein wasserstoffhaltiges Gasgemisch der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser.

Den Elektroden der Brennstoffzellen werden mittels Bipolarplatten die Reaktantengase zugeführt. Zusätzlich zu den Reaktantengasen wird aufgrund der bei der Brennstoffzellenreaktion erzeugten Wärme auch ein Kühlmedium durch die Bipolarplatten durchgeführt, so dass auf kleinstem Raum drei verschiedene Medien durch die Bipolarplatten geführt werden.

Bei der Versorgung der Brennstoffzellen mit den Reaktanten werden diese über Hauptkanäle (Ports) in die Bipolarplatten geleitet, die eine Verteilung der Reaktanten in einen aktiven Bereich bewirken soll, um mittels eines Flussfeldes die gesamte Fläche der Elektroden möglichst gleichmäßig zu versorgen. Da in dem Brennstoffzellenstapel mehrere Bipolarplatten mit den Membran-Elektroden-Einheiten gestapelt sind, werden Dichtungen eingesetzt, die die Hauptkanäle längs durch den Brennstoffzellenstapel abdichten. Zusätzlich muss eine gute Abdichtung gegenüber dem in Kühlmittelkanälen strömenden Kühlmedium erfolgen.

Um eine Gleichverteilung des Reaktionsmediums über den aktiven Bereich der Bipolarplatte hervorrufen, schlagen die DE 10 2008 033 211 A1 und die EP 2 026 393 A1 vor, den Strömungsquerschnitt der Strömungskanäle des Reaktantenflussfelds entlang ihrer Längserstreckung gezielt zu variieren, um Druckverluste auszugleichen. Eine Bipolarplatte, bei der der aktive Bereich in einen Eintrittsbereich und einen verbleibenden Teilbereich gegliedert ist, ist der DE 10 2016 111 638 A1 zu entnehmen, wobei die Strömungsführungen der beiden Teilbereiche mit einem unterschiedlichen Strömungsquerschnitten gebildet sind.

Außerhalb des aktiven Bereichs, insbesondere in demjenigen Bereich, in welchem ausgehend von den Medienports die Versorgung des aktiven Bereichs erfolgt, ist es üblich, die Betriebsmedien gleichmäßig durch den gezielten Einsatz von Verzweigungen der Strömungsführung zu verteilen. In diesem Verteilbereich fällt es bei der Aufteilung eines einzelnen Kanals in zwei, drei oder vier Kanäle des folgenden Bereichs, insbesondere bei hohen Volumenströmen und/oder Strömungsgeschwindigkeiten, zunehmend schwerer, eine gleichmäßige Aufteilung des Gesamtvolumenstroms zu erzielen. Dadurch kann das Verteilerfeld zu einer Ungleichverteilung des Reaktionsmediums an den aktiven Bereich der Bipolarplatte führen.

CN 108 736 037 A beschreibt eine Bipolarplatte, die in ihrem Verteilbereich einen Strömungsteiler besitzt. Strömauf des Strömungsteilers ragt ein sich vom benachbarten Steg erstreckender Vorsprung in den Kanal vor. US 2012/321987 beschreibt einen Verteilbereich, in dem die Kanäle unterschiedliche Tiefen aufweisen. U

Es ist daher die Aufgabe der vorliegenden Erfindung, eine Bipolarplatte und einen Brennstoffzellenstapel bereitzustellen, die dem vorstehenden Nachteil Rechnung tragen.

Diese Aufgabe wird mit einer Bipolarplatte mit den Merkmalen des Anspruchs 1 und durch einen Brennstoffzellenstapel mit den Merkmalen des Anspruchs 10 gelöst. Vorteilhafte Ausgestaltungen mit zweckmäßigen Weiterbildungen der Erfindung sind in den abhängigen Ansprüchen angegeben.

Die erfindungsgemäße Bipolarplatte zeichnet sich insbesondere dadurch aus, dass der den Strömungsteiler aufweisende Kanal eine Kanalanhebung aufweist, welche einen Anstieg umfasst, der unter einem vorgegebenen Abstand stromauf des Strömungsteilers vorliegt. Auf diese Weise wird der aufgrund laminarer Strömung ausgeprägte zentrale Medienstrom durch Reduzierung der Höhe des Kanals eine Verbreiterung aufgezwungen, so dass die Querschnittsform der Medienströmung von einer runden in eine elliptische Form übergeht und deshalb sanfter auf den Strömungsteiler auftrifft.

Dabei ist die Möglichkeit gegeben, dass die Kanalanhebung einen Abstieg als Abschluss der Kanalanhebung aufweist, der unter einem zweiten vorgegebenen Abstand stromauf des Strömungsteilers vorliegt. Auf diese Weise ist also eine kurze, insbesondere gleichmäßige, Anhebung des Kanalgrunds in geringem Abstand vor dem Strömungsteiler geschaffen. Rein beispielhaft beträgt dabei der erste Abstand des Anstiegs von 1,5 cm bis 3 cm vor dem Strömungsteiler, wobei der zweite Abstand des Abstiegs vorzugsweise von 0,5 cm bis 1,5 cm vor dem Strömungsteiler liegt.

Es ist aber alternativ auch möglich, dass sich die Kanalanhebung bis um den Strömungsteiler erstreckt und somit einen beidseits des Strömungsteilers vorgesehenen Abstieg als Abschluss der Kanalanhebung aufweist. Auf diese Weise ist also eine, insbesondere gleichmäßig flächige, Anhebung mit einem Beginn vor dem Strömungsteiler und zwei Enden nach dem Strömungsteiler geschaffen, die zu einem noch sanfteren Auftreffen des Medienstroms führt und damit eine gleichmäßigere Verteilung ermöglicht.

Um die im Querschnitt verbreiterte laminare Strömung vor einer Entstehung von Turbulenzen zu schützen, ist es von Vorteil, wenn zwischen dem Anstieg und dem wenigstens einen Abstieg der Kanalanhebung ein konstanter Strömungsquerschnitt des Kanals vorliegt.

In diesem Zuge ist es auch sinnvoll, wenn die Kanalanhebung in Strömungslängsrichtung über die gesamte Breite des Kanals gleichmäßig oder konstant gebildet ist.

Da es in vielen Fällen genügt, das Zentrum des laminaren Medienstroms zu beeinflussen, um die Querschnittsform der Medienströmung von einer runden zu einer elliptischen oder länglichen Form zu wandeln, ist es sinnvoll, wenn die Kanalanhebung in Strömungslängsrichtung konvex gebildet ist, insbesondere dann wenn diese konvexe Kanalanhebung in der Kanalmitte ausgebildet ist.

Weiterhin ist die Möglichkeit vorhanden, dass eine ungleichmäßige Kanalanhebung vorliegt, die derart optimiert ist, dass bereits eine Vorprägung des Volumenstroms vor dem Strömungsteiler erfolgt, sodass der Medienstrom bereits zu einer Aufteilung angeregt wird. Diese Gestaltung geht daher hinaus über die bloße Aufteilung des Stroms mit Hilfe des Strömungsteilers alleine.

Für eine Verbreiterung des kreisrunden Querschnitts der laminaren Medienströmung hat es sich als vorteilhaft erwiesen, wenn der Anstieg der Kanalanhebung im Kanal zu einer Anhebung von 20 Prozent bis 50 Prozent gegenüber der Kanaltiefe (bzw. Kanalhöhe) eines anhebungsfreien Abschnitts des Kanals führt. Dadurch wird also auch der Strömungsquerschnitt für die laminare Strömung um 20 Prozent bis 50 Prozent reduziert, bei einer entsprechenden Umverteilung der größten Strömungsgeschwindigkeit des Medienstroms.

Für eine noch sanftere Umlenkung und Umverteilung des Medienstroms trägt außerdem bei, wenn der Strömungsteiler mit einer Verrundung versehen ist.

Die in Verbindung mit der erfindungsgemäßen Bipolarplatte erläuterten Vorteile, vorteilhafte Ausgestaltungen und Wirkungen, gelten in gleichem Maße für den erfindungsgemäßen Brennstoffzellenstapel, der mit einer Mehrzahl an Brennstoffzellen mit den erfindungsgemäßen Bipolarplatten ausgerüstet ist. Auch dieser zeichnet sich durch eine verbesserte Verteilung der Betriebsmedien aus, aufgrund der im Verteilbereich eingesetzten Kanalanhebungen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung eines eine Mehrzahl von Brennstoffzellen aufweisenden Brennstoffzellenstapels mit den die Hauptkanälen zeigenden Bipolarplatten,
- Fig. 2: eine schematische Detaildarstellung des Schnitts II-II durch den aktiven Bereich der Bipolarplatte aus Figur 1,
- Fig. 3: eine schematische Detaildraufsicht auf einen Kanal mit Strömungsteiler im Verteilbereich einer der Figur 1 entsprechenden Bipolarplatte gemäß dem Standes der Technik (mit Strömungsverteilung),
- Fig. 4: eine schematische Schnittansicht durch einen Kanal mit einer Illustration der im laminaren Medienstrom vorliegenden Strömungsgeschwindigkeitsbereichen,
- Fig. 5: eine der Figur 3 entsprechende Darstellung des Verteilbereichs mit einer stromauf des Strömungsteilers beginnenden und stromauf des Strömungsteilers endenden Kanalanhebung,
- Fig. 6: eine Seitenansicht auf den Kanal aus Figur 5,
- Fig. 7: eine der Figur 3 entsprechende Darstellung des Verteilbereichs mit einer stromauf des Strömungsteilers beginnenden und stromab des Strömungsteilers endenden Kanalanhebung,
- Fig. 8: eine Seitenansicht auf den Kanals aus Figur 7,
- Fig. 9: die sich aufgrund der Kanalanhebung ergebende Verbreiterung der Strömungsgeschwindigkeitsbereiche in einer Querschnittsansicht, und
- Fig. 10: die sich aufgrund einer konvex geformten Kanalanhebung ergebende Verbreiterung der Strömungsgeschwindigkeitsbereiche in einer Querschnittsansicht.

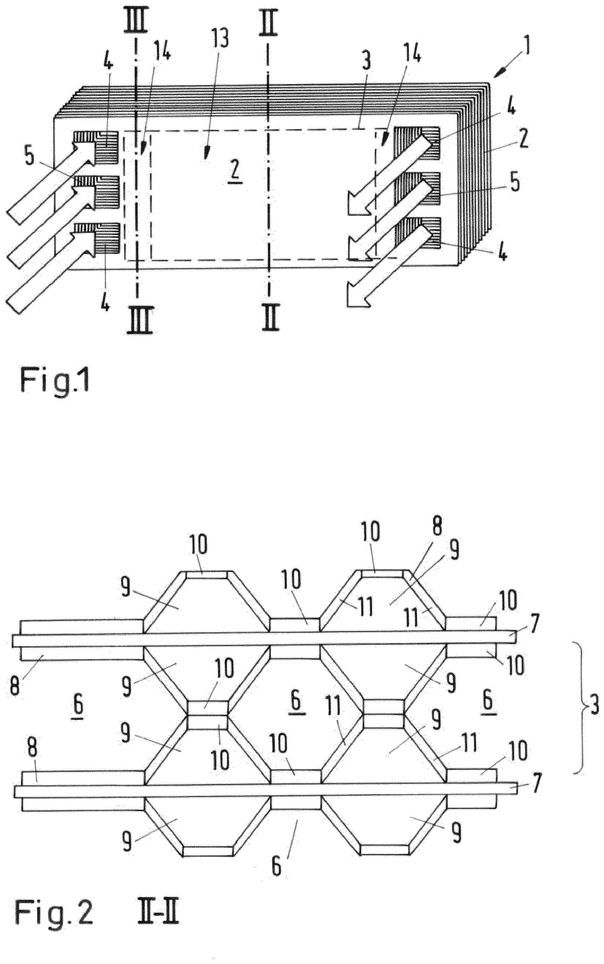

Ein in Figur 1 gezeigter Brennstoffzellenstapel 1 besteht aus einer Mehrzahl von in Reihe geschalteter Brennstoffzellen 2. Jede der Brennstoffzellen 2 umfasst eine Anode und eine Kathode sowie eine die Anode von der Kathode trennende protonenleitfähige Membran. Die beiden Elektroden zusammen mit der Membran bilden eine Membran-Elektroden-Anordnung 7 (kurz: MEA). Die Membran ist aus einem lonomer, vorzugsweise einem sulfonierten Tetrafluorethylen-Polymer (PTFE) oder einem Polymer der perfluorierten Sulfonsäure (PFSA) gebildet. Alternativ kann die Membran als eine sulfonierte Hydrocarbon-Membran gebildet sein.

Über Anodenräume innerhalb des Brennstoffzellenstapels 1 wird den Anoden Brennstoff (zum Beispiel Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (zum Beispiel H⁺) hindurch, ist aber undurchlässig für die Elektronen (e-). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet. Über Kathodenräume innerhalb des Brennstoffzellenstapels 1 kann den Kathoden Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Dem Brennstoffzellenstapel 1 wird über eine Kathodenfrischgasleitung durch einen Verdichter komprimierte Luft zugeführt wird. Zusätzlich ist der Brennstoffzellenstapel 1 mit einer Kathodenabgasleitung verbunden. Anodenseitig wird dem Brennstoffzellenstapel 1 in einem Wasserstofftank bereitgehaltener Wasserstoff über eine Anodenfrischgasleitung zugeführt zur Bereitstellung der für die elektrochemische Reaktion in einer Brennstoffzelle 2 erforderlichen Reaktanten. Diese Gase werden an Bipolarplatten 3 übergeben, die für die Verteilung der Gase an die Membran und der Ausleitung Hauptkanäle 4 (Ports) aufweisen. Zusätzlich weisen die Bipolarplatten Hauptkühlmittelkanäle 5 (Ports) für die Durchleitung eines Kühlmediums in einem Kühlmittelkanal 6 auf, so dass auf kleinstem Raum drei verschiedene Medien geführt werden.

In Figur 1 sind also auch die jeweils zu Paaren zusammengefassten Hauptkanäle 4, 5 einer Mehrzahl den Brennstoffzellenstapel 1 bildenden Brennstoffzellen 2 mit Bipolarplatten 3 gezeigt.

Ein Detailausschnitt des Brennstoffzellenstapels 1 entlang des Schnittes II-II aus Figur 1 ist in Figur 2 gezeigt. Dieser Schnitt verläuft durch den aktiven Bereich 13 des Brennstoffzellenstapels 1. Der aktive Bereich 13 der Bipolarplatte 3 ist dabei selbstverständlich selbst nicht elektrochemisch aktiv, aber er ist zu denjenigen Konstituenten der Brennstoffzelle 2 benachbart angeordnet, bei welchen die elektrochemische Brennstoffzellenreaktion erfolgt. Es ist zu erkennen, dass die Bipolarplatte 3 in diesem aktiven Bereich 13 auf ihren voneinander wegweisenden Oberflächen die Reaktantenflussfelder aufweist, die sich gegenüberliegend angeordnet sind und damit eine gegenüberliegende Konfiguration ausbilden. Die Reaktantenflussfelder weisen jeweils eine Mehrzahl von durch Wandungen 11 von Stegen 10 begrenzten Strömungskanälen 9 für das jeweilige Reaktionsmedium auf. Die Stege 10 und die Strömungskanäle 9 der Einen der Einzelplatten 8 sind in diesem aktiven Bereich 13 also gegenüberliegend zu den Stegen 10 und den Strömungskanälen 9 der Anderen der Einzelplatten 8 verlaufend gestaltet. Auf diese Weise werden Kühlmittelkanäle 6 eines sich zwischen den Einzelplatten 8 erstreckenden Kühlmittelflussfelds gebildet.

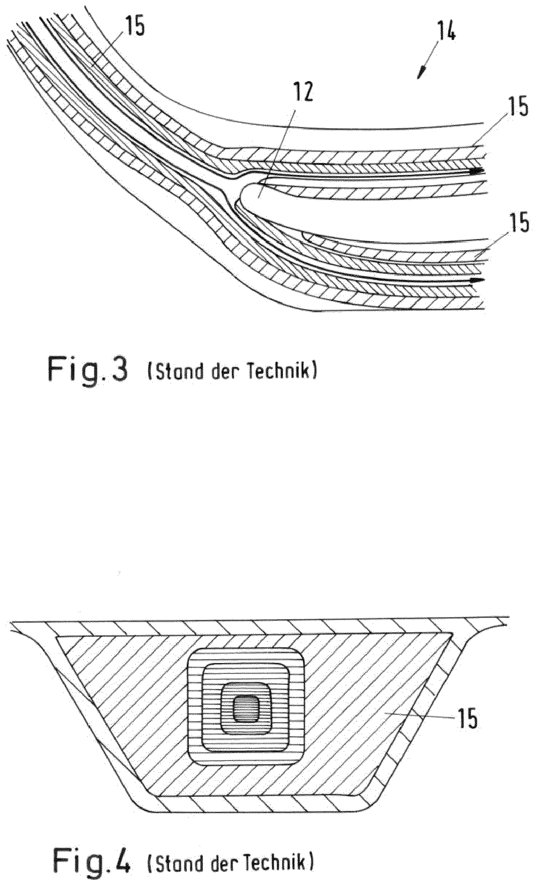

Es ist erforderlich, die Betriebsmedien möglichst gleichmäßig in den aktiven Bereich 13 der Bipolarplatte verteilt einzuleiten, weshalb es bekannt ist, zwischen den Medienports 4, 5 und dem aktiven Bereich 13 einen Verteilbereich mit einem Kanäle 15 umfassenden Verteilerfeld einzubringen. Die Kanäle 15 sind weisen hierzu geeignete Verzweigungen auf, die durch Strömungsteiler 12 realisiert werden, wobei sich stromab des Strömungsteilers dann zwei der Kanäle 15 fortsetzen. Aus Figuren 3 und 4 wird dies in einer Detailansicht illustriert, wobei das Betriebsmedium in Form einer laminaren Strömung auf den Strömungsteiler 12 auftrifft. Figur 4 verdeutlicht dabei, dass im Zentrum des Querschnitts des Kanals 15 die höchste Strömungsgeschwindigkeit der Strömung vorherrscht. Diese höchste Strömungsgeschwindigkeit trifft deshalb auf den Strömungsteiler 12 auf.

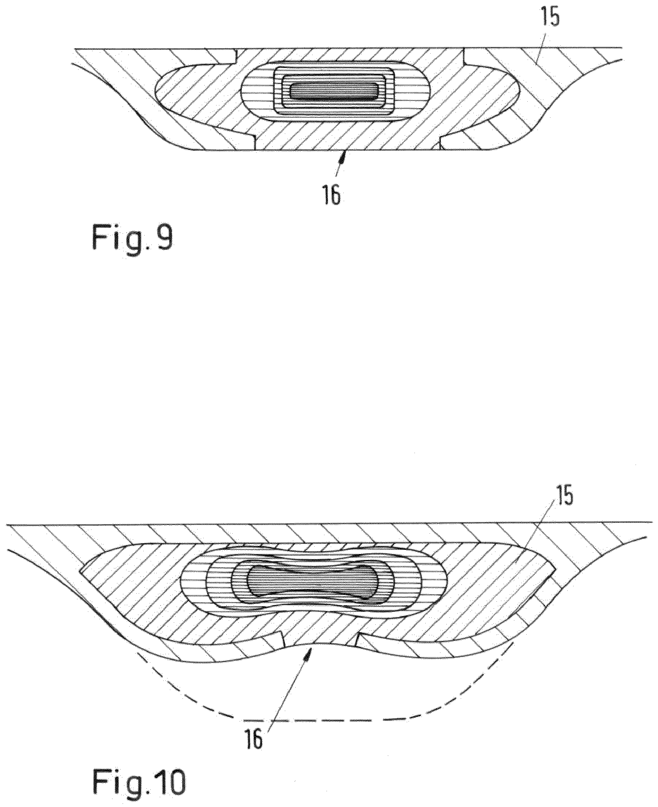

Diesem Problem stellt sich die erfindungsgemäße Bipolarplatte 3, wobei der den Strömungsteiler 12 aufweisende Kanal 15 eine Kanalanhebung 16 aufweist, welche einen Anstieg 17 umfasst, der unter einem vorgegebenen Abstand stromauf des Strömungsteilers 12 vorliegt. Durch diese Kanalanhebung 16 wird die im Querschnitt quasi kreisflächige Verteilung der Strömungsgeschwindigkeit der laminaren Strömung verbreitert, wie dies in der Querschnittsansicht von Figur 9 illustriert ist. So formt sie beispielsweise elliptische Strömungsgeschwindigkeitsbereiche aus. Auf diese Weise trifft die Strömung "sanfter" auf die Strömungsteiler 12 auf, was eine verbesserte Verteilung des Mediums auf die nachfolgenden Bereiche des Verteilerfelds oder auf den nachfolgenden aktiven Bereich 13 des Reaktenflussfelds bewirkt.

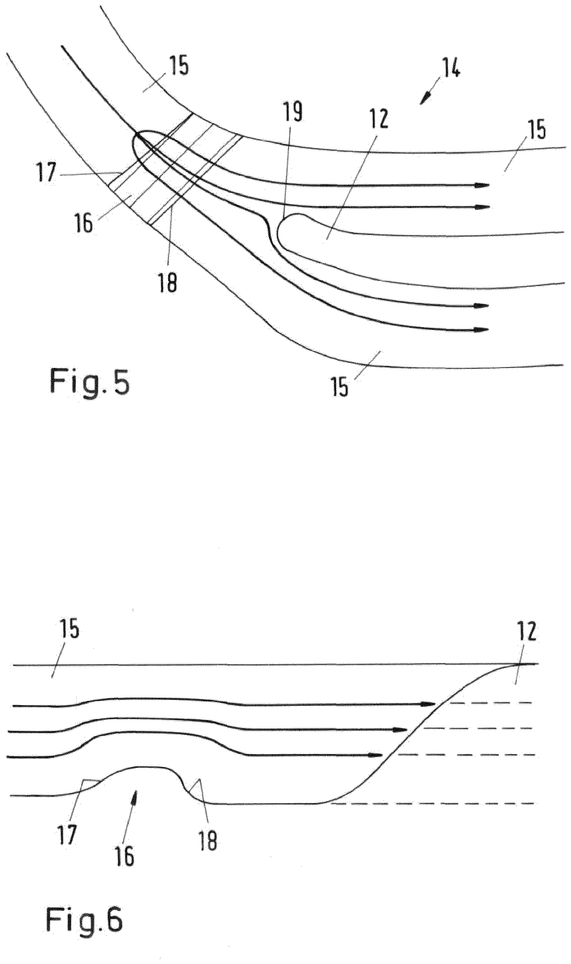

In Figuren 5 und 6 ist eine erste Gestaltung zu erkennen, bei der die Kanalanhebung 16 einen Abstieg 18 als Abschluss der Kanalanhebung 16 aufweist, der unter einem zweiten vorgegebenen Abstand stromauf des Strömungsteilers 12 vorliegt. Somit beginnt und endet die Kanalanhebung 16 also knapp vor dem Strömungsteiler 12, was ausreicht um eine Verbreiterung der Strömungsgeschwindigkeitsverteilung hervorzurufen.

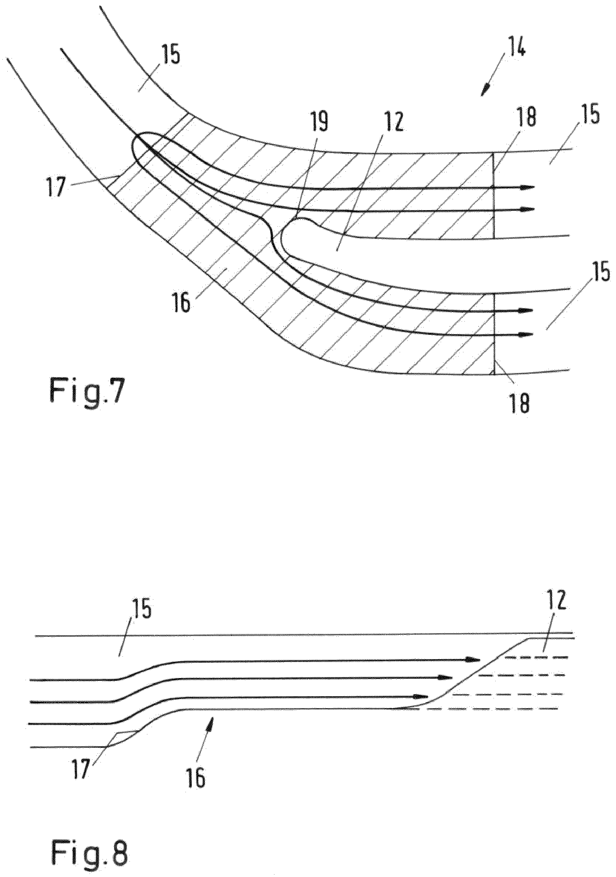

In Figuren 7 und 8 ist eine zweite Gestaltung zu erkennen, bei der sich die Kanalanhebung 16 bis um den Strömungsteiler 12 herum erstreckt und dahinter noch ein Stück fortsetzt. Auf diese Weise weist die Kanalanhebung 16 einen beidseits des Strömungsteilers 12 vorgesehenen Abstieg 18 als Abschluss der Kanalanhebung 16 auf.

Bei beiden Gestaltungen liegt zwischen dem Anstieg 17 und dem wenigstens einen Abstieg 18 der Kanalanhebung 16 ein konstanter Strömungsquerschnitt des Kanals 15 vor, wobei die Kanalanhebung 12 in Strömungslängsrichtung über die gesamte Breite des Kanals 15 gleichmäßig oder konstant gebildet ist. Der Anstieg 17 der Kanalanhebung 16 im Kanal 15 führt dabei nicht zu einer vollständigen Blockade des Medienstroms oder zu einer echten Aufteilung, vielmehr führen die Anstiege 17 der jeweiligen Kanalanhebung 16 vorzugsweise lediglich zu einer Anhebung von 20 Prozent bis 50 Prozent gegenüber der Kanaltiefe oder Kanalhöhe eines anhebungsfreien Abschnitts des Kanals 15.

Figur 10 verweist abschließend noch auf die Möglichkeit, dass die Kanalanhebung 16 in Strömungslängsrichtung konvex gebildet ist. Diese konvexe Kanalanhebung 16 ist vorliegend in der Kanalmitte ausgebildet; also dort, wo die größte Strömungsgeschwindigkeit des Medienstroms vorliegt. Aufgrund dieser zentral oder mittig angeordneten konvexen Kanalanhebung 16 wird die Geschwindigkeitsverteilung des Medienstroms verändert, insbesondere verbreitert, so dass der Medienstrom "sanfter" auf die Strömungsteiler 12 auftrifft. Es sei darauf hingewiesen, dass auch andere Formgebungen für die Kanalanhebungen 16 möglich sind, die zu einem gewünschten Umverteilen der Bereiche für die Strömungsgeschwindigkeiten führen.

Jeder der gezeigten Strömungsteiler 12 ist mit einer Verrundung 19 versehen worden, was die Aufteilung oder Umverteilung des Medienstroms zusätzlich begünstigt.

Im Ergebnis ist mit der vorliegenden Erfindung also eine Gleichverteilung der Medienströme bereits im Verteilbereich 14 gegeben, so dass eine verbesserte Medienverteilung über die gesamte Bipolarplatte 3 und zugleich über den gesamten Brennstoffzellenstapel 1 vorliegt.

### BEZUGSZEICHENLISTE:

- 1: Brennstoffzellenstapel
- 2: Brennstoffzelle
- 3: Bipolarplatte
- 4: Hauptkanal für Reaktanten
- 5: Hauptkühlmittelkanal für Kühlmedium
- 6: Kühlmittelkanal
- 7: Membran-Elektroden-Anordnung (MEA)
- 8: Einzelplatte
- 9: Strömungskanal
- 10: Steg
- 11: Wandung
- 12: Strömungsteiler
- 13: Aktiver Bereich
- 14: Verteilbereich
- 15: Kanal (Verteilbereich / Verteilerfeld)
- 16: Kanalanhebung
- 17: Anstieg
- 18: Abstieg
- 19: Verrundung

## Patentansprüche

1. Bipolarplatte (3) die an ihren voneinander wegweisenden Plattenoberflächen jeweils mit einem Reaktantenflussfeld gebildet ist, welches mehrere durch Wandungen (11) von Stegen (10) begrenzte Strömungskanäle (9) für ein Reaktionsmedium umfasst, wobei das jeweilige Reaktantenflussfeld strömungsmechanisch mit einem Medienport (4, 5) über ein Verteilerfeld in einem außerhalb eines aktiven Bereichs (13) befindlichen Verteilbereich (14) verbunden ist, wobei wenigstens ein Kanal (15) des Verteilerfelds mit einem Strömungsteiler (12) zur Aufteilung eines strömenden Reaktionsmediums vor dessen Einleitung in den aktiven Bereich (13) versehen ist, **dadurch gekennzeichnet, dass** der den Strömungsteiler (12) aufweisende Kanal (15) eine Kanalanhebung (16) aufweist, welche einen Anstieg (17) umfasst, der unter einem vorgegebenen Abstand stromauf des Strömungsteilers (12) vorliegt.

2. Bipolarplatte (3) nach Anspruch 1, **dadurch gekennzeichnet, dass** die Kanalanhebung (16) einen Abstieg (18) als Abschluss der Kanalanhebung (16) aufweist, der unter einem zweiten vorgegebenen Abstand stromauf des Strömungsteilers (12) vorliegt.

3. Bipolarplatte (3) nach Anspruch 1, **dadurch gekennzeichnet, dass** sich die Kanalanhebung (16) bis um den Strömungsteiler (12) erstreckt und somit einen beidseits des Strömungsteilers (12) vorgesehenen Abstieg (18) als Abschluss der Kanalanhebung (16) aufweist.

4. Bipolarplatte (3) nach Anspruch 2 oder 3, **dadurch gekennzeichnet, dass** zwischen dem Anstieg (17) und dem wenigstens einen Abstieg (18) der Kanalanhebung (16) ein konstanter Strömungsquerschnitt des Kanals (15) vorliegt.

5. Bipolarplatte (3) nach einem der Ansprüche 1 bis 4, **dadurch gekennzeichnet, dass** die Kanalanhebung (12) in Strömungslängsrichtung über die gesamte Breite des Kanals (15) gleichmäßig oder konstant gebildet ist.

6. Bipolarplatte (3) nach einem der Ansprüche 1 bis 4, **dadurch gekennzeichnet, dass** die Kanalanhebung (16) in Strömungslängsrichtung konvex gebildet ist.

7. Bipolarplatte (3) nach Anspruch 6, **dadurch gekennzeichnet, dass** die konvexe Kanalanhebung (16) in der Kanalmitte ausgebildet ist.

8. Bipolarplatte (3) nach einem der Ansprüche 1 bis 7, **dadurch gekennzeichnet, dass** der Anstieg (17) der Kanalanhebung (16) im Kanal (15) zu einer Anhebung von 20 Prozent bis 50 Prozent gegenüber der Kanaltiefe eines anhebungsfreien Abschnitts des Kanals (15) führt.

9. Bipolarplatte (3) nach einem der Ansprüche 1 bis 8, **dadurch gekennzeichnet, dass** der Strömungsteiler (12) mit einer Verrundung (19) versehen ist.

10. Brennstoffzellenstapel (1) umfassend eine Mehrzahl an Brennstoffzellen (2) mit Bipolarplatten (3) nach einem der Ansprüche 1 bis 9.

## Claims

1. A bipolar plate (3) which is formed on each of its plate surfaces facing away from one another with a reactant flow field which comprises a plurality of flow channels (9), delimited by walls (11) of webs (10), for a reaction medium, the respective reactant flow field being connected fluidically to a medium port (4,5) via a distribution field being provided with a flow divider (12) for dividing a flowing reaction medium before it is introduced into the active region (13), **characterized in that** the channel (15) having the flow divider (12) has a channel elevation (16) which comprises a rise (17) which is present at a predetermined distance upstream of the flow divider (12).

2. The bipolar plate (3) according to claim 1, **characterized in that** the channel elevation (16) has a drop (18) as a termination of the channel elevation (16), which is present at a second predetermined distance upstream of the flow divider (12).

3. The bipolar plate (3) according to claim 1, **characterized in that** the channel elevation (16) extends around the flow divider (12) and thus has a drop (18) provided on both sides of the flow divider (12) as a termination of the channel elevation (16).

4. The bipolar plate (3) according to claim 2 or 3, **characterized in that** there is a constant flow cross-section of the channel (15) between the rise (17) and the at least one drop (18) of the channel elevation (16).

5. The bipolar plate (3) according to one of claims 1 to 4, **characterized in that** the flow divider (12) is formed uniformly or constantly over the entire width of the channel (15) in the longitudinal direction of flow.

6. The bipolar plate (3) according to one of claims 1 to 4, **characterized in that** the channel elevation (16) is convex in the longitudinal direction of flow.

7. The bipolar plate (3) according to claim 6, **characterized in that** the convex channel elevation (16) is formed in the centre of the channel.

8. The bipolar plate (3) according to one of claims 1 to 7, **characterized in that** the rise (17) of the channel elevation (16) in the channel (15) leads to an elevation of 20 percent to 50 percent compared to the channel depth of an elevation-free section of the channel (15).

9. The bipolar plate (3) according to one of claims 1 to 8, **characterized in that** the flow divider (12) is provided with a rounding (19).

10. A fuel cell stack (1) comprising a plurality of fuel cells (2) with bipolar plates (3) according to any one of claims 1 to 9.

## Revendications

1. Plaque bipolaire (3) qui est formée au niveau de ses surfaces de plaque s'éloignant l'une de l'autre respectivement par un champ d'écoulement de réactif qui comprend plusieurs canaux d'écoulement (9) délimités par des entretoises (10) à travers des parois (11) pour un milieu de réaction, dans laquelle le champ d'écoulement de réactif respectif est relié fluidiquement à un orifice de milieu (4, 5) par l'intermédiaire d'un champ de répartition dans une zone de répartition (14) se trouvant à l'extérieur d'une zone active (13), dans laquelle au moins un canal (15) du champ de répartition est doté d'un répartiteur d'écoulement (12) destiné au partage d'un milieu de réaction qui s'écoule avant l'introduction de celui-ci dans la zone active (13), **caractérisée en ce que** le canal (15) présentant le répartiteur d'écoulement (12) présente une élévation de canal (16) qui comprend une montée (17) qui est présente à une distance prédéfinie en amont du répartiteur d'écoulement (12).

2. Plaque bipolaire (3) selon la revendication 1, **caractérisée en ce que** l'élévation de canal (16) présente, en tant que fin de l'élévation de canal (16), une descente (18) qui est présente à une seconde distance prédéfinie en amont du répartiteur d'écoulement (12).

3. Plaque bipolaire (3) selon la revendication 1, **caractérisée en ce que** l'élévation de canal (16) s'étend jusqu'au répartiteur d'écoulement (12) et présente ainsi une descente (18) prévue de part et d'autre du répartiteur d'écoulement (12) en tant que fin de l'élévation de canal (16).

4. Plaque bipolaire (3) selon la revendication 2 ou 3, **caractérisée en ce que**, entre la montée (17) et la au moins une descente (18) de l'élévation de canal (16) une section transversale d'écoulement constant du canal (15) est présente.

5. Plaque bipolaire (3) selon l'une quelconque des revendications 1 à 4, **caractérisée en ce que** l'élévation de canal (16) est formée de manière régulière ou constante dans le sens longitudinal d'écoulement sur toute la largeur du canal (15).

6. Plaque bipolaire (3) selon l'une quelconque des revendications 1 à 4, **caractérisée en ce que** l'élévation de canal (16) est formée de manière convexe dans le sens longitudinal d'écoulement.

7. Plaque bipolaire (3) selon la revendication 6, **caractérisée en ce que** l'élévation de canal convexe (16) est configurée dans le centre du canal.

8. Plaque bipolaire (3) selon l'une quelconque des revendications 1 à 7, **caractérisée en ce que** la montée (17) de l'élévation de canal (16) dans le canal (15) conduit à une élévation de 20 pour cent à 50 pour cent par rapport à la profondeur de canal d'une section du canal (15) sans élévation.

9. Plaque bipolaire (3) selon l'une quelconque des revendications 1 à 8, **caractérisée en ce que** le répartiteur d'écoulement (12) est doté d'un arrondi (19).

10. Empilement de piles à combustible (1) comprenant une pluralité de piles à combustible (2) avec des plaques bipolaires (3) selon l'une quelconque des revendications 1 à 9.
